# EUROPEAN PATENT APPLICATION

(11) **EP 4 850 966 A2**
(43) Date of publication of application: **09.12.2026**
(21) Application number: 26179000.0
(22) Date of filing: 15.05.2026
(51) Int. Cl.: B60L 15/20, B60L 1/00, B60W 50/08

(54) **METHODS AND SYSTEMS FOR OPERATING A TRACTOR WITH VARIABLE HORSEPOWER**

(30) Priority: 15.05.2025 IN 202541047003
(71) Applicant: Mahindra & Mahindra Limited, Chengalpattu, Tamil Nadu 603004 (IN)
(72) Inventor: SARAVANAN, N, 603004 Chengalpattu (IN); SENTHIL, T, 603004 Chengalpattu (IN); POPLI, Viren, 603004 Chengalpattu (IN); RAY, Dipankar, 603004 Chengalpattu (IN); SUNDARAM, Pavithra, 603004 Chengalpattu (IN); HALDORAI, Ranjan, 603004 Chengalpattu (IN)
(74) Representative: Boult Wade Tennant LLP

(57) **Abstract**

Methods and systems for operating a tractor with variable horsepower Embodiments herein disclose methods and systems for operating an electric tractor with variable horsepower, wherein the tractor is configured to provide variable horsepower with electric powertrains of the tractor (such as, but not limited to, the battery pack(s), OBC DC-DC, motors (traction & PTO), inverters (traction), and so on) remains same. Embodiments herein disclose methods and systems for operating an electric tractor with variable horsepower, wherein the range of the electric tractor is optimized.

## Description

### TECHNICAL FIELD

Embodiments disclosed herein relate to tractors, and more particularly to operating a tractor, wherein the tractor is configured to operate with at least one battery, wherein the vehicle comprises a High Voltage battery (for propulsion), and a Low Voltage battery (for low voltage circuits/modules/systems present in the tractor).

### BACKGROUND

Currently, electric tractors are becoming popular, wherein the tractor can be a purely electric tractor, or a hybrid tractor. In tractor segment, different ranges of horsepower (HP) are available, which can accordingly define different tractor segments. Based on HP, the components of the tractor have to be changed.

Hence, there is a need in the art for solutions which will overcome the above mentioned drawback(s), among others.

### OBJECTS

The principal object of embodiments herein is to disclose methods and systems for operating an electric tractor with variable horsepower, wherein the tractor is configured to provide variable horsepower with electric powertrains of the tractor (such as, but not limited to, the battery pack(s), OBC DC-DC, motors (traction & PTO), inverters (traction & PTO), Chargers and so on) remains same.

Another object of embodiments herein is to disclose methods and systems for operating an electric tractor with variable horsepower, wherein the range of the electric tractor is optimized.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF FIGURES

Embodiments herein are illustrated in the accompanying drawings, throughout which like reference letters indicate corresponding parts in the various figures. The embodiments herein will be better understood from the following description with reference to the following illustratory drawings. Embodiments herein are illustrated by way of examples in the accompanying drawings, and in which:
FIG. 1 depicts a system for controlling the horsepower in a tractor, according to embodiments as disclosed herein; and
FIGs. 2 and 3 are flowcharts depicting the process of operating an electric tractor with variable horsepower, wherein the tractor is configured to provide variable horsepower with electric powertrains of the tractor, according to embodiments as disclosed herein.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

For the purposes of interpreting this specification, the definitions (as defined herein) will apply and whenever appropriate the terms used in singular will also include the plural and vice versa. It is to be understood that the terminology used herein is for the purposes of describing particular embodiments only and is not intended to be limiting. The terms "comprising", "having" and "including" are to be construed as open-ended terms unless otherwise noted.

The words/phrases "exemplary", "example", "illustration", "in an instance", "and the like", "and so on", "etc.", "etcetera", "e.g.," , "i.e.," are merely used herein to mean "serving as an example, instance, or illustration." Any embodiment or implementation of the present subject matter described herein using the words/phrases "exemplary", "example", "illustration", "in an instance", "and the like", "and so on", "etc.", "etcetera", "e.g.," , "i.e.," is not necessarily to be construed as preferred or advantageous over other embodiments.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

It should be noted that elements in the drawings are illustrated for the purposes of this description and ease of understanding and may not have necessarily been drawn to scale. For example, the flowcharts/sequence diagrams illustrate the method in terms of the steps required for understanding of aspects of the embodiments as disclosed herein. Furthermore, in terms of the construction of the device, one or more components of the device may have been represented in the drawings by conventional symbols, and the drawings may show only those specific details that are pertinent to understanding the present embodiments so as not to obscure the drawings with details that will be readily apparent to those of ordinary skill in the art having the benefit of the description herein. Furthermore, in terms of the system, one or more components/modules which comprise the system may have been represented in the drawings by conventional symbols, and the drawings may show only those specific details that are pertinent to understanding the present embodiments so as not to obscure the drawings with details that will be readily apparent to those of ordinary skill in the art having the benefit of the description herein.

The accompanying drawings are used to help easily understand various technical features and it should be understood that the embodiments presented herein are not limited by the accompanying drawings. As such, the present disclosure should be construed to extend to any modifications, equivalents, and substitutes in addition to those which are particularly set out in the accompanying drawings and the corresponding description. Usage of words such as first, second, third etc., to describe components/elements/steps is for the purposes of this description and should not be construed as sequential ordering/placement/occurrence unless specified otherwise.

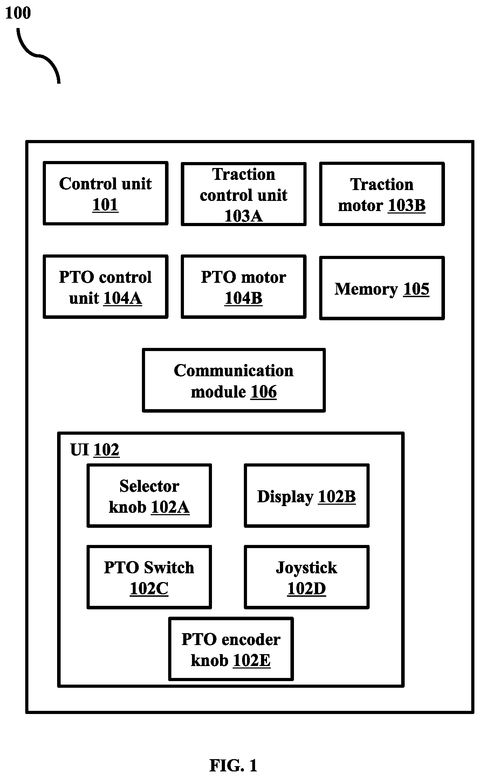

The embodiments herein achieve methods and systems for operating an electric tractor with variable horsepower, wherein the tractor is configured to provide variable horsepower with electric powertrains of the tractor (such as, but not limited to, the battery pack(s), OBC DC-DC, motors (traction & PTO), inverters (traction, PTO, and so on), and so on) remains same. Referring now to the drawings, and more particularly to FIGS. 1 through 3, where similar reference characters denote corresponding features consistently throughout the figures, there are shown embodiments.

The 'tractor', as referred to herein can be a tractor equipped with at least one battery, wherein the battery can power the movement of the tractor. In an embodiment herein, the tractor can be an electric tractor. In an embodiment herein, the tractor can be a hybrid tractor. Embodiments herein use the terms 'tractor', 'electric tractor', 'vehicle, 'electric vehicle', and so on interchangeably to refer to the tractor. The tractor comprises a High Voltage battery (for propulsion), and a Low Voltage battery (for low voltage circuits/modules/systems present in the tractor).

FIG. 1 depicts a system for controlling the horsepower in a tractor. The system 100, as depicted, comprises a control unit 101, at least one user interface (UI) 102, a traction control unit 103A, at least one traction motor 103B, a PTO control unit 104A, at least one PTO motor 104B, a memory 105, and at least one communication module 106.

The control unit 101 can be at least one of a single processor, a plurality of processors, multiple homogeneous or heterogeneous cores, multiple Central Processing Units (CPUs) of different kinds, microcontrollers, special media, and other accelerators. The control unit 101 may be an Application Processor (AP), a graphics-only processing unit such as a Graphics Processing Unit (GPU), a Visual Processing Unit (VPU), and/or an Artificial Intelligence (AI)-dedicated processor such as a Neural Processing Unit (NPU). In an embodiment herein, the control unit 101 can be a dedicated control unit. In an embodiment herein, the control unit 101 can be a control unit, which performs one or more actions/tasks in addition to embodiments as disclosed herein. In an embodiment herein, the control unit 101, the traction control unit 103A, and the PTO control unit 104A can be separate units. In an embodiment herein, the control unit 101, the traction control unit 103A, and the PTO control unit 104A can be separate units, wherein the control unit 101 can provide instructions to the traction control unit 103A, and the PTO control unit 104A to drive the at least one traction motor 103B, and the at least one PTO motor 104B respectively.

The at least one UI 102 can enable a user to control/monitor/interact with the tractor. The UI 102 can comprise a selector knob 102A, at least one display 102B (which can be a display and/or a touchscreen display), a Power Take-Off (PTO) switch 102C, a joystick 102D, a PTO encoder knob 102E, and so on.

The joystick 102D can be an electronic joystick, wherein the joystick can comprise a FNR (ForwardNeutralReverse) activation button/switch & a wired communication (such as, but not limited to, CAN, LIN, and so on). The joystick 102D can send a status of the FNR (activate/deactivate), status of the F button, and status of the R button. The status of the N button can be sent via the wired communication to other controllers present in the vehicle. The user can enable FNR activation, when the loader operation is being used in the tractor. On the user enabling the joystick 102D via FNR activation (i.e., enables the joystick mode), the user can drive the tractor with only one pedal for both forward & reverse directions, which reduces user operation during loader operation. The joystick 102D can also be user (either mechanically, or physically) for operating the loader for lifting/lowering/dumping/loading.

The PTO encoder knob 102E can be used for varying the PTO speed.

In an embodiment herein, the at least one traction motor 103B can power one or more wheels of the tractor, wherein the at least one traction motor 103B can be driven by the traction control unit 103A, based on instructions from the control unit 101. In an embodiment herein, the at least one traction motor 103B can use high voltage battery power (from at least one high voltage battery (not shown)) for powering one or more wheels of the tractor. The output of the at least one traction motor 103B (in terms of horsepower) can be controlled by the control unit 101, either automatically, or based on instructions from a user of the tractor. The at least one traction motor 103B can have multiple horsepower levels, such as X1, X2, X3, X4, .......Xn, wherein X1 is the default horsepower, and X1 < X2 < X3 < X4 < .......< Xn. In an example herein, the at least one traction motor 103B can provide an output of 10 horsepower, 15 horsepower, 20 horsepower, 25 horsepower, 30 horsepower, 40 horsepower, and so on.

In the embodiment shown herein, the at least one memory 105 may comprise one or more volatile and non-volatile memory components that are capable of storing data and instructions to be executed. Examples of the at least one memory 105 can be, but are not limited to, embedded Multimedia Card (eMMC), Secure Digital (SD) cards, Universal Serial Bus (USB), Serial Advanced Technology Attachment (SATA), Solid-State Drive (SSD), and so on. The at least one memory 105 may also include one or more computer-readable storage media. Examples of non-volatile storage elements may include magnetic hard discs, optical discs, floppy discs, flash memories, or forms of electrically programmable memories (EPROM) or electrically erasable and programmable (EEPROM) memories. In addition, the at least one memory 105 may, in some examples, be considered a non-transitory storage medium. The term "non-transitory" may indicate that the storage medium is not embodied in a carrier wave or a propagated signal. However, the term "non-transitory" should not be interpreted to mean that the at least one memory 105 is non-movable. In certain examples, a non-transitory storage medium may store data that can, over time, change (for example, in Random Access Memory (RAM) or cache).

The memory 105 can comprise of operational maps, wherein the operational maps comprise of a mapping of horsepower levels, and corresponding power output of the at least one traction motor 103B (in KiloWatts (kW)), vehicle speed limits (miles per hour/kilometers per hour), motor speed (in Revolutions Per Minute (RPM)), traction motor speed (RPM), traction torque, PTO motor speed (RPM), PTO torque, and so on.

In an embodiment herein, the at least one communication module 106 is configured to enable communication between the control module 101, and at least one system/device/module present in the vehicle. The at least one communication module 106 through which the control module 101, and at least one system/device/module present in the vehicle communicate may include wired and/or wireless communication medium compatible with one or more different communication protocols. The at least one communication module 106 can use one or more ports, such as, but not limited to, Serial digital interface (SDI), High-Definition Multimedia Interface (HDMI), Universal Serial Bus (USB), USB-C, and so on. The at least one communication module 106 may be configured for communication through a network. The network may comprise, but are not limited to, Global Positioning System (GPS), Global System for Mobile Communications (GSM), Local Area Network (LAN), Wireless Fidelity (Wi-Fi) compatibility, Bluetooth Low Energy (BLE), Near-field Communication (NFC), and so on. The wireless communication may further comprise one or more of Bluetooth, Zonal Intercommunication Global Standard (ZigBee), short-range wireless communication such as Ultra-wideband (UWB), medium-range wireless communication (such as, but not limited to, Wi-Fi, or long-range wireless communication such as Third Generation (3G), Fourth Generation (4G), Fifth Generation (5G), Sixth Generation (6G), or Worldwide Interoperability for Microwave Access (WiMAX)), according to the usage environment.

In an embodiment herein, the at least one communication module 106 is configured to enable communication between the control module 101, and/or the vehicle, and at least one external entity through a network or cloud. The at least one communication module 106 through which the control module 101, and/or the vehicle and the at least one external entity communicate may include wired and/or wireless communication medium compatible with one or more different communication protocols. The at least one communication module 106 can use one or more ports, such as, but not limited to, Serial digital interface (SDI), High-Definition Multimedia Interface (HDMI), Universal Serial Bus (USB), USB-C, and so on. The at least one communication module 106 may be configured for communication through a network. The network may comprise, but are not limited to, Global Positioning System (GPS), Global System for Mobile Communications (GSM), Local Area Network (LAN), Wireless Fidelity (Wi-Fi) compatibility, Bluetooth Low Energy (BLE), Near-field Communication (NFC), and so on. The wireless communication may further comprise one or more of Bluetooth, Zonal Intercommunication Global Standard (ZigBee), short-range wireless communication such as Ultra-wideband (UWB), medium-range wireless communication (such as, but not limited to, Wi-Fi, or long-range wireless communication such as Third Generation (3G), Fourth Generation (4G), Fifth Generation (5G), Sixth Generation (6G), or Worldwide Interoperability for Microwave Access (WiMAX)), according to the usage environment.

On the tractor being started, the user of the tractor can select a horsepower that the user requires, using the UI 102. In an example herein, the user can select the horsepower using the selector knob 102A. In an example herein, the user can select the horsepower using the display 102B.

The control unit 101 can receive the user selection of the horsepower (hereinafter referred to as the current horsepower). In an embodiment herein, the control unit 101 can select the default horsepower value (hereinafter referred to as the current horsepower), if the user has not selected the horsepower. In an embodiment herein, the default horsepower value can be the lowest available horsepower value. In an embodiment herein, the default horsepower value can be the highest available horsepower value. In an embodiment herein, the default horsepower value can be the median available horsepower value. In an embodiment herein, the default horsepower value can be a pre-defined horsepower value, wherein the user can pre-define the default horsepower value. Based on the current horsepower, the control unit 101 can select a traction mode. The traction mode can comprise controlling the motor power (kW) (up to a maximum power value), and vehicle speed limit, based on the corresponding operational map. In traction modes based on the horsepower, the control unit 101 can control the power output of the traction motor, and the vehicle speed limit. Table 1 depicts an example operational map for controlling the tractor based on the traction mode, wherein the horsepower can be one of 20 hp, 30 hp, and 40 hp.

**Table 1**

| Horsepower (hp) | Traction mode | Motor power limit (kW) | Speed limit (km/hr) |
|---|---|---|---|
| 20 | A | 15 | 20 |
| 30 | B | 22.3 | 30 |
| 40 | C | 29.8 | 40 |

Based on the current horsepower and user inputs, the control unit 101 can select corresponding operation modes; a steering mode, a loader mode, and a PTO mode. If the user has not turned on PTO (using one of the selector knob 102A, the display 102C, the PTO switch 102C), or not pressed the joystick 102D, or the vehicle is ON, then the control unit 101 will operate the vehicle in a steering mode, where a PTO motor 104B will be running at a lower speed (as depicted in the examples in table 2) for steering purpose (low hydraulic flow rate). Based on the current traction mode (that the vehicle is currently operating in), the control unit 101 can operate in a corresponding steering mode. For example, when the vehicle is operating in traction mode A, the control unit 101 can operate the vehicle in steering mode A. For example, when the vehicle is operating in traction mode B, the control unit 101 can operate the vehicle in steering mode B. For example, when the vehicle is operating in traction mode C, the control unit 101 can operate the vehicle in steering mode C. In the steering mode, the control unit 101 can control the speed of the PTO motor (RPM) 104B with respect to the hydraulic pump & flow rate for each mode. Table 2 depicts an example operational map for controlling the tractor based on the steering mode, wherein the horsepower can be one of 20 hp, 30 hp, and 40 hp.

**Table 2**

| Horsepower (hp) | Steering mode | Motor speed (RPM) | PTO speed (RPM) | Pump speed (RPM) | Steering flow (LPM) |
|---|---|---|---|---|---|
| 20 | A | 1409 | 224 | 895 | 6.8 |
| 30 | B | 1600 | 250 | 1000 | 8 |
| 40 | C | 1920 | 300 | 1200 | 9 |

On the user pressing an activation button on the joystick activation button, and the PTO being off, the control unit 101 will operate the vehicle in a loader mode, where the speed of the PTO motor 104B will be running according to the requirement of hydraulic flow rate of a hydraulic pump (not shown). Based on the current traction mode (that the vehicle is currently operating in), the control unit 101 can operate in a corresponding loader mode. For example, when the vehicle is operating in traction mode A, the control unit 101 can operate the vehicle in loader mode A. For example, when the vehicle is operating in traction mode B, the control unit 101 can operate the vehicle in loader mode B. For example, when the vehicle is operating in traction mode C, the control unit 101 can operate the vehicle in loader mode C. In the loader mode, the control unit 101 can control the speed of the PTO motor (RPM) 104B with respect to the hydraulic pump and flow rate for each mode. Table 3 depicts an example operational map for controlling the tractor based on the loader mode, wherein the horsepower can be one of 20 hp, 30 hp, and 40 hp.

**Table 3**

| Horsepower (hp) | Loader mode | Motor speed (RPM) | PTO speed (RPM) | Pump speed (RPM) | Auxiliary flow (LPM) |
|---|---|---|---|---|---|
| 20 | A | 3402 | 540 | 2160 | 32.8 |
| 30 | B | 3780 | 600 | 2400 | 36.5 |
| 40 | C | 4160 | 650 | 2600 | 38.4 |

If the user has turned on PTO (using one of the selector knob 102A, the display 102C, the PTO switch 102C) and the joystick is not activated (i.e., OFF), the control unit 101 will operate the vehicle in a PTO mode, where the PTO motor 104B will be running at a pre-determined speed (for example, 500 rpm, 520 rpm, 540 rpm, 560 rpm, and so on). For example, when the vehicle is operating in traction mode A, the control unit 101 can operate the vehicle in PTO mode A. For example, when the vehicle is operating in traction mode B, the control unit 101 can operate the vehicle in PTO mode B. For example, when the vehicle is operating in traction mode C, the control unit 101 can operate the vehicle in PTO mode C. In the PTO modes, the control unit 101 can control the torque of the PTO motor (RPM) 104B with respect to the selected horsepower modes. Table 4 depicts an example operational map for controlling the tractor based on the PTO mode, wherein the horsepower can be one of 20 hp, 30 hp, and 40 hp.

**Table 4**

| Horsepower (hp) | PTO mode | Motor speed (RPM) | PTO speed (RPM) | PTO motor torque (Nm) | PTO torque mode |
|---|---|---|---|---|---|
| 20 | A | 3072 to 3840 | 480 to 600 | 47.3 to 37.8 | A |
| 30 | B | 3072 to 3840 | 480 to 600 | 70.6 to 56.5 | B |
| 40 | C | 3072 to 3840 | 480 to 600 | 94.1 to 75.2 | C |

In an embodiment herein, the user can change the horsepower, when the tractor is being operated using the UI 102. In an example herein, the user can select the horsepower using the selector knob 102A. In an example herein, the user can select the horsepower using the display 102B. Based on the user selection, the control unit 101 can accordingly re-select the traction mode, and/or steering mode, and/or loader mode, and/or PTO mode.

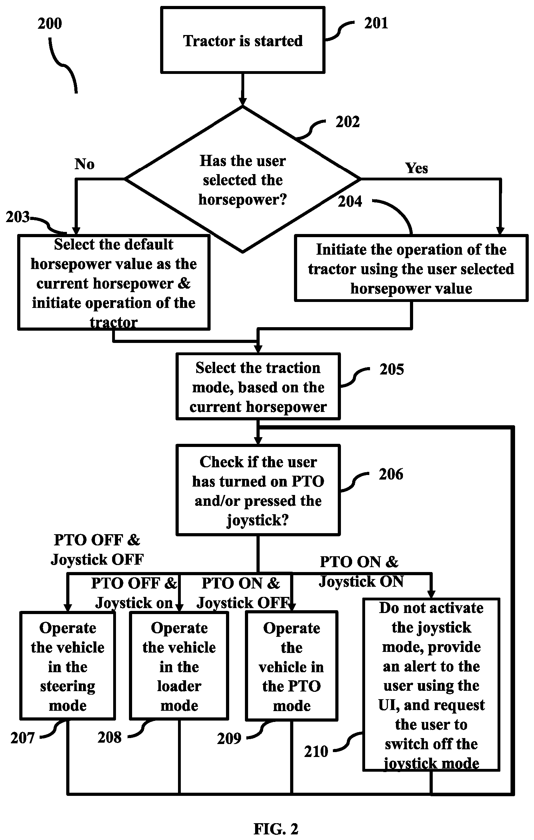

FIG. 2 is a flowchart depicting the process of operating an electric tractor with variable horsepower, wherein the tractor is configured to provide variable horsepower with electric powertrains of the tractor. In step 201, the tractor is started. In step 202, the control unit 101 checks if the user has selected the horsepower of the tractor, wherein the user selects the horsepower that the user requires, using the UI 102 (i.e., the selector knob 102A, and/or the display 102B). If the user has not selected the horsepower, in step 203, the control unit 101 selects the default horsepower value (X1) as the current horsepower, and initiates operation of the tractor using the default horsepower. If the user has selected the horsepower, in step 204, the control unit 101 initiates the operation of the tractor using the user selected horsepower value. Based on the current horsepower, in step 205, the control unit 101 selects the traction mode, which can comprise controlling the motor power (kW) (up to the maximum power value), and vehicle speed limit, based on the corresponding operational map. The control unit 101 checks if the user has turned on PTO (using one of the selector knob 102A, the display 102C, the PTO switch 102C), and/or pressed the joystick 102D (step 206). If the user has not turned on PTO, and has not pressed the joystick 102D, in step 207, the control unit 101 operates the vehicle in the steering mode, where the PTO motor 104B will be running at a lower speed for steering purpose (low hydraulic flow rate) for each mode. If the user has pressed an activation button on the joystick activation button, and the PTO is OFF, in step 208, the control unit 101 operates the vehicle in the loader mode, where the speed of the PTO motor 104B will be running according to the requirement of hydraulic flow rate of the hydraulic pump for each mode. If the user has turned on PTO, and the user has not pressed an activation button on the joystick activation button, in step 209, the control unit 101 operates the vehicle in the PTO mode, where the PTO motor 104B will be running at a pre-determined speed and torque, based on the PTO mode. If PTO is ON, and the joystick is activated (i.e., joystick is ON) via FNR activation, in step 210, the control unit 101 does not activate the joystick mode, provides an alert to the user using the UI 102, and requests the user to switch off the joystick mode. In an embodiment herein, consider that the user is already in PTO mode, and the user is trying to activate the joystick. The various actions in method 200 may be performed in the order presented, in a different order or simultaneously. Further, in some embodiments, some actions listed in FIG. 2 may be omitted.

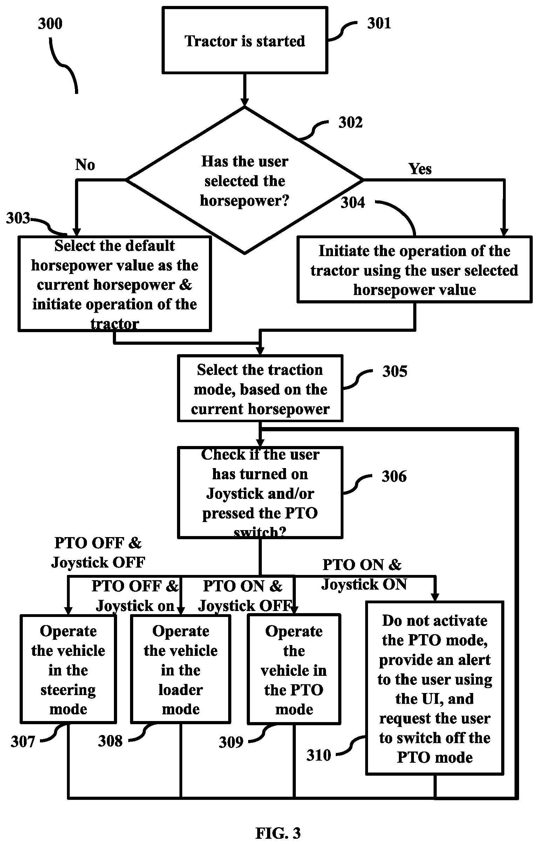

FIG. 3 is a flowchart depicting the process of operating an electric tractor with variable horsepower, wherein the tractor is configured to provide variable horsepower with electric power trains of the tractor. In step 301, the tractor is started. In step 302, the control unit 101 checks if the user has selected the horsepower of the tractor, wherein the user selects the horsepower that the user requires, using the UI 102 (i.e., the selector knob 102A, and/or the display 102B). If the user has not selected the horsepower, in step 303, the control unit 101 selects the default horsepower value (X1) as the current horsepower, and initiates operation of the tractor using the default horsepower. If the user has selected the horsepower, in step 304, the control unit 101 initiates the operation of the tractor using the user selected horsepower value. Based on the current horsepower, in step 305, the control unit 101 selects the traction mode, which can comprise controlling the motor power (kW) (up to the maximum power value), and vehicle speed limit, based on the corresponding operational map. The control unit 101 checks if the user has turned on the joystick, and/or pressed the joystick 102D (step 306). If the user has not turned on PTO, and has not pressed the PTO switch, in step 307, the control unit 101 operates the vehicle in the steering mode, where the PTO motor 104B will be running at a lower speed for steering purpose (low hydraulic flow rate) for each mode. If the user has pressed an activation button on the joystick activation button, and the PTO is OFF, in step 308, the control unit 101 operates the vehicle in the loader mode, where the speed of the PTO motor 104B will be running according to the requirement of hydraulic flow rate of the hydraulic pump for each mode. If the user has turned on PTO, and the user has not pressed an activation button on the joystick activation button, in step 309, the control unit 101 operates the vehicle in the PTO mode, where the PTO motor 104B will be running at a pre-determined speed and torque, based on the PTO mode. If PTO is ON, and the joystick is activated (i.e., joystick is ON) via FNR activation, in step 310, the control unit 101 does not activate the PTO mode, provides an alert to the user using the UI 102, and requests the user to switch off the PTO. In an embodiment herein, consider that the joystick is activated, and the user is turning on the PTO mode. The various actions in method 300 may be performed in the order presented, in a different order or simultaneously. Further, in some embodiments, some actions listed in FIG. 3 may be omitted.

The embodiments disclosed herein can be implemented through at least one software program running on at least one hardware device and performing network management functions to control the network elements. The elements include blocks which can be at least one of a hardware device, or a combination of hardware device and software module.

The embodiments disclosed herein describe methods and systems for operating an electric tractor with variable horsepower, wherein the tractor is configured to provide variable horsepower with electric powertrains of the tractor (such as, but not limited to, the battery pack(s), OBC DC-DC, motors (traction & PTO), inverters (traction, and PTO), and so on) remains same. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in at least one embodiment through or together with a software program written in e.g., Very high speed integrated circuit Hardware Description Language (VHDL) another programming language, or implemented by one or more VHDL or several software modules being executed on at least one hardware device. The hardware device can be any kind of portable device that can be programmed. The device may also include means which could be e.g., hardware means like e.g., an ASIC, or a combination of hardware and software means, e.g., an ASIC and an FPGA, or at least one microprocessor and at least one memory with software modules located therein. The method embodiments described herein could be implemented partly in hardware and partly in software. Alternatively, the invention may be implemented on different hardware devices, e.g., using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments and examples, those skilled in the art will recognize that the embodiments and examples disclosed herein can be practised with modification within the scope of the embodiments as described herein.

## Claims

1. A method (200) for operating a tractor, the method comprising:
receiving (204), by a control unit (101), a user selection of a current horsepower that the tractor is to be operated in; and
selecting (205), by the control unit (101), a traction mode, based on the current horsepower.

2. The method, as claimed in claim 1, wherein the tractor is one of an electric tractor, and a hybrid tractor.

3. The method, as claimed in claim 1, wherein the method comprises selecting, by the control unit (101), a default horsepower as the current horsepower.

4. The method, as claimed in claim 1, wherein the method comprises controlling, by the control module, a power of at least one traction motor (103B), and vehicle speed limit, based on a corresponding operational map, in the traction mode.

5. The method, as claimed in claim 1, wherein the method comprises:
selecting (207), by the control unit (101), a steering mode, based on the current traction mode, if a user of the tractor has not turned ON power take-off (PTO), and has not pressed a joystick, wherein a PTO motor (104B) will be running at a lower speed for steering;
selecting (207), by the control unit (101), a loader mode, based on the current traction mode, if a user of the tractor has pressed a joystick, and PTO is OFF, wherein speed of the PTO motor (104B) is controlled with respect to a hydraulic pump, and flow rate; and
selecting (207), by the control unit (101), a PTO mode, based on the current traction mode, if a user of the tractor has turned ON power take-off (PTO), and not pressed a joystick, wherein the PTO motor (104B) will be running at a pre-determined speed and torque.

6. The method, as claimed in claim 1, wherein the method comprises:
not selecting, by the control module (101), the PTO mode, on receiving the user selection of the current horsepower that the tractor is to be operated, if a joystick mode is activated using a joystick (102D);
not selecting, by the control module (101), the loader mode, on receiving the user selection of the current horsepower that the tractor is to be operated, if a PTO mode is activated; and
providing, by the control module (101), an alert to a user.

7. A control unit (101) in a tractor, the control unit (101) configured to:
receive a user selection of a current horsepower that the tractor is to be operated in; and
select a traction mode, based on the current horsepower.

8. The control unit, as claimed in claim 7, wherein the tractor is one of an electric tractor, and a hybrid tractor.

9. The control unit, as claimed in claim 7, wherein the control unit (101) is configured to select a default horsepower as the current horsepower.

10. The control unit, as claimed in claim 7, wherein the control unit (101) is configured to control a power of at least one traction motor (103B), and vehicle speed limit, based on a corresponding operational map, in the traction mode.

11. The control unit, as claimed in claim 7, wherein the control unit (101) is configured to:
select a steering mode, based on the current traction mode, if a user of the tractor has not turned ON power take-off (PTO), and has not pressed a joystick, wherein a PTO motor (104B) will be running at a lower speed for steering;
select a loader mode, based on the current traction mode, if a user of the tractor has pressed a joystick, and PTO is OFF, wherein speed of the PTO motor (104B) is controlled with respect to a hydraulic pump, and flow rate; and
select a PTO mode, based on the current traction mode, if a user of the tractor has turned ON power take-off (PTO), and not pressed a joystick, wherein the PTO motor (104B) will be running at a pre-determined speed and torque.

12. The control unit, as claimed in claim 7, wherein the control unit (101) is configured to:
not select the PTO mode, on receiving the user selection of the current horsepower that the tractor is to be operated, if a joystick mode is activated using a joystick (102D);
not select the loader mode, on receiving the user selection of the current horsepower that the tractor is to be operated, if a PTO mode is activated; and
provide an alert to a user.
